# EUROPEAN PATENT SPECIFICATION

(11) **EP 3 982 443 B1**
(45) Date of publication and mention of the grant of the patent: **25.09.2024**
(21) Application number: 21201035.9
(22) Date of filing: 05.10.2021
(51) Int. Cl.: H01M 4/36, H01M 4/587, H01M 4/62, H01M 4/1393, H01M 4/02, H01M 10/0525

(54) **ANODE ACTIVE MATERAL FOR LITHIUM SECONDARY BATTERY AND METHOD OF PREPARING THE SAME**
AKTIVES ANODENMATERIAL FÜR LITHIUMSEKUNDÄRBATTERIE UND HERSTELLUNGSVERFAHREN DAFÜR
MATÉRIAU ACTIF D'ANODE POUR BATTERIE SECONDAIRE AU LITHIUM ET SON PROCÉDÉ DE PRÉPARATION

(30) Priority: 08.10.2020 KR 20200130433
(43) Date of publication of application: 13.04.2022
(73) Proprietor: SK On Co., Ltd., Seoul 03161 (KR)
(72) Inventor: LEE, Jong Hyuk, 34124 Daejeon (KR); KANG, Hee Gyoung, 34124 Daejeon (KR); LEE, Mi Ryeong, 34124 Daejeon (KR)
(74) Representative: Stolmár & Partner Patentanwälte PartG mbB

(56) References cited:
- JP-A- 2008 288 153
- JP-B2- 4 012 362

## Description

### CROSS-REFERENCE TO RELATED APPLICATION AND CLAIM OF PRIORITY

This application claims priority to Korean Patent Application No. 10-2020-0130433 filed on October 8, 2020 in the Korean Intellectual Property Office (KIPO).

### BACKGROUND

### 1. Field

The present invention relates to an anode active material for a lithium secondary battery and a method of preparing the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

For example, the lithium secondary battery may include an anode containing, e.g., a carbon-based material capable of adsorbing and releasing lithium ions, a cathode formed of a lithium-containing oxide, and a non-aqueous electrolyte containing a lithium salt dissolved in an organic solvent.

When a carbon-based material is applied to the lithium secondary battery as an anode active material, a decomposition reaction of the electrolyte may occur during charging and discharging because a charge/discharge potential of lithium is lower than a stable range of the non-aqueous electrolyte. As a result, an SEI (Solid Electrolyte Interface or Solid Electrolyte Interphase) film is formed on the surface of the carbon-based anode active material. The decomposition and formation of the SEI film may be repeated during the charging and discharging processes. The formation of the unstable film deteriorates an initial charge/discharge efficiency, a high rate property and a life-span of the lithium secondary battery.

For example, Korean Granted Patent Publication No. 10-0326446 discloses an anode active material including a spherical carbon-based material, but the charge/discharge efficiency and life-span may be deteriorated due to the decomposition reaction of the electrolyte. Another example of such materials may be found in Patent Literature JP 2008 288153A.

### SUMMARY

According to the present invention, there is provided an anode active material for a lithium secondary battery having improved operational stability and electrical property and a method of preparing the same.

According to an aspect of the present invention, there is provided a lithium secondary battery having improved operational stability and electrical property

According to exemplary embodiments, an anode active material for a lithium secondary battery includes a carbon-based particle; and a coating layer bonded to at least a portion of a surface of the carbon-based particle. The coating layer includes boron and a conductive material.

In some embodiments, the coating layer may include boron oxide.

The conductive material includes a linear-type conductive material.

The linear-type conductive material includes at least one selected from the group consisting of carbon nanotube, carbon nanofiber, a metal fiber, a vapor-grown carbon fiber and graphene.

In some embodiments, the metal fiber may include at least one selected from the group consisting of copper (Cu), nickel (Ni), aluminum (Al), iron (Fe), silver (Ag), gold (Au), platinum (Pt), zinc (Zn), titanium (Ti) and an alloy thereof.

In some embodiments, the carbon-based particle may include at least one selected from the group consisting of artificial graphite, natural graphite, graphitized carbon fiber, graphitized mesocarbon microbead, petroleum cokes, a sintered resin-based material, carbon fiber, activated carbon and pyrolytic carbon.

In some embodiments, a weight ratio of the conductive material relative to boron may be from 0.1% to 30%.

In some embodiments, a thickness of the coating layer may be from 10 nm to 100 nm.

In a method of preparing an anode active material for a lithium secondary battery according to the invention, a carbon-based particle is prepared. A coating solution is prepared by dispersing a boron source and a conductive material in a solvent. The carbon-based particle and the coating solution are mixed to form a mixture. The mixture is heat-treated.

In some embodiments, a mixing weight ratio of the boron source and the conductive material may be from 20:1 to 2:1.

In some embodiments, the solvent includes at least one of water and ethanol.

The heat-treating is performed in an air atmosphere or an inert gas atmosphere at a temperature from 400 °C to 600 °C.

According to exemplary embodiments, a lithium secondary battery includes an anode including the anode active material for a lithium secondary battery according to embodiments as described above, and a cathode facing the anode.

An anode active material for a lithium secondary battery according to exemplary embodiments of the present invention includes a carbon-based particle and a coating layer combined with at least a portion of a surface of the carbon-based particle, and the coating layer includes boron and a conductive material. Thus, an electrolyte decomposition reaction may be suppressed by an inorganic coating layer, and capacity, life-span and cycle properties of the battery may be enhanced.

In some embodiments, the conductive material may include a linear-type conductive material. Thus, mechanical strength of the coating layer may be improved to prevent detachment of the coating layer, and an electron transfer path between particles may be formed to improve power of the battery.

A lithium secondary battery according to exemplary embodiments of the present invention may include the anode active material that includes the carbon-based particle and the coating layer being combined with at least a portion of the surface of the carbon-based particle and including boron and the conductive material. Thus, a formation gas that may be generated during an initial formation may be removed or reduced so that a formation process may be simplified or omitted to improve productivity.

### BRIEF DESCRIPTION OF THE DRAWINGS

FIGS. 1 and 2 are a schematic top planar view and a cross-sectional view, respectively, illustrating a lithium secondary battery in accordance with exemplary embodiments.
FIG. 3 is an SEM (Scanning Electron Microscope) image of an enlarged surface of artificial graphite.
FIG. 4 is an SEM image showing an enlarged surface of artificial graphite after firing at 500° C in an air atmosphere.
FIG. 5 is an SEM image of an enlarged surface of an anode active material particle of Example 1 after firing at 500° C in an air atmosphere.

### DETAILED DESCRIPTION OF THE EMBODIMENTS

According to exemplary embodiments of the present invention, an anode active material for a lithium secondary battery which includes a carbon-based particle and a coating layer being combined with at least a portion of a surface of the carbon-based and including boron and a conductive material is provided. According to exemplary embodiments of the present invention, a lithium secondary battery including an anode formed of the anode active material is also provided.

### <Anode active material for lithium secondary battery and method of preparing the same >

An anode active material according to embodiments of the present invention may include a carbon-based particle and a coating layer bonded to at least a portion of the surface of the carbon-based particle. The coating layer includes boron (B) and a conductive material.

The anode active material for a lithium secondary battery may serve as a material for adsorbing and desorbing lithium ions, and the carbon-based particle may be used as the active material. The carbon-based particle may include, e.g., at least one of artificial graphite, natural graphite, graphitized carbon fiber, graphitized mesocarbon microbead, petroleum cokes, a sintered resin-based material, carbon fiber, activated carbon and pyrolytic carbon.

An average particle diameter (D₅₀, e.g., based on a volumetric cumulative distribution) of the carbon-based particles may be, e.g., from about 7 µm to about 30 µm, but is not limited thereto. For example, the carbon-based particle may include a secondary particle having an average particle diameter from 10 µm to 25 µm which may be formed from an assembly of primary particles having an average particle diameter from 5 µm to 15 µm.

The coating layer may be a coated layer combined with at least a portion of the surface of the carbon-based particle, and the anode active material according to embodiments of the present invention includes the coating layer to improve capacity and cycle life-span of the battery while also increasing power of the battery.

In exemplary embodiments, the coating layer may include boron and a conductive material. The coating layer may contain boron to suppress a decomposition reaction of the electrolyte and to improve an irreversible capacity of the battery. Additionally, electrons may easily move through the conductive material while the inorganic coating layer is included, so that the power and life-span of the battery may be improved.

Further, the coating layer including boron and the conductive material is formed on the surface of the carbon-based particle in the anode active material according to embodiments of the present invention, so that an oxidation resistance to a firing process may be achieved.

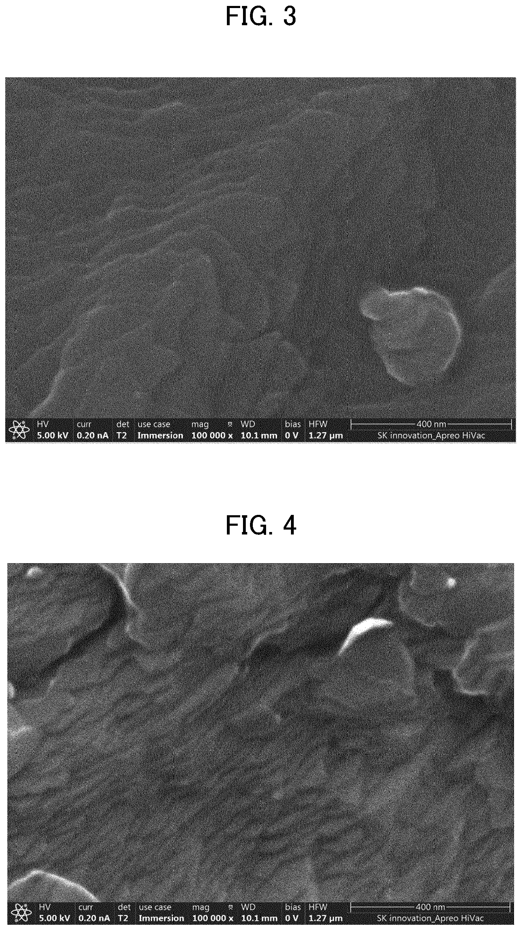

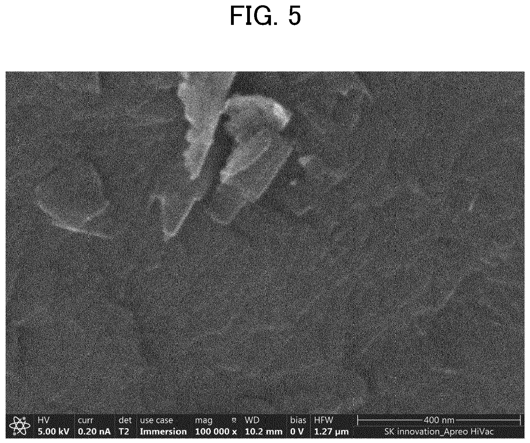

FIG. 3 is an SEM image of a surface of artificial graphite, and FIG. 4 is an SEM image showing a surface of artificial graphite after firing at 500° C in an air atmosphere. FIG. 5 is an SEM image of a surface of an anode active material particle after forming the coating layer including boron and the conductive material and firing at 500° C in an air atmosphere.

In a state as shown in FIG. 3, the surface of the carbon-based particle before firing was uniform, and a specific surface area of artificial graphite was measured as 2.19 m²/g.

In a state as shown in FIG. 4, a specific surface area of artificial graphite after being subjected to the high-temperature firing was measured as 2.39 m²/g.

FIG. 5 shows a surface observed after forming the coating layer on the artificial graphite particles of FIG. 3 and then performing the high-temperature firing treatment the same as that performed to the artificial graphite particles of FIG. 4. A specific surface area of the graphite particles on which the coating layer of FIG. 5 was formed was measured as 2.17 m²/g. Referring to FIG. 5, when B₂O₃ was coated by an excessive amount of 3%, a thick coating layer was formed to provide a non-uniform surface shape.

Thus, the coating layer according to exemplary embodiments was formed on the anode active material to obtain resistance to an oxidation reaction in the high-temperature firing. Accordingly, in the lithium secondary battery including the anode active material having the coating layer formed thereon, a gas generated during an initial formation in a formation process may be removed or reduced to improve productivity of the lithium secondary battery.

In some embodiments, boron may be present in the coating layer as a single element or in the form of a compound with other elements. The boron compound may include, e.g., boron oxide. For example, B₂O₃, H₃BO₃, etc., may be included in the coating layer. In an embodiment, the coating layer may be formed by mixing a coating solution containing boron oxide (B₂O₃), boric acid (H₃BO₃), etc., with the carbon-based particles.

In exemplary embodiments, the conductive material may include a particle-shaped conductive material and/or a linear-type conductive material, preferably may include the linear-type conductive material.

The term "linear-type conductive material" used herein indicates a conductive material having a large aspect ratio, e.g., in the form of a fibrous structure. The linear-type conductive material may be electrochemically stable while having an improved conductivity, may preferably have the fibrous structure. Non-limiting examples of the shape of the fibrous structure may be, e.g., a cylindrical shape or a hollow shape. The linear-type conductive material may effectively form an electrically conductive network of the coating layer and provide an excellent ion conduction to lithium ions.

An aspect ratio of the linear-type conductive material may be 2 or more, 3 or more, 4 or more, 5 or more, 10 or more, 20 or more, 50 or more, or 100 or more. The aspect ratio of the linear-type conductive material may be defined as a ratio of a maximum length and a minimum length between any both ends of the conductive material. Accordingly, the linear-type conductive material may be three-dimensionally dispersed in the coating layer to form a conductive network and improve an electrical conductivity of the anode.

For example, the linear-type conductive material may be at least one selected from the group consisting of fine fibrous carbon having a diameter of less than 100 nm and fibrous carbon having a diameter of 100 nm or more. Therefore, the electrical conductivity of the anode active material and a mechanical strength of the coating layer may be improved to prevent the coating layer from being detached even during repeated charging and discharging.

In some embodiments, the linear-type conductive material may include at least one of carbon nanotube (CNT), carbon nanofiber (CNF), a metal fiber, a vapor-grown carbon fiber (VGCF) and graphene.

In some embodiments, the metal fiber may include at least one of copper (Cu), nickel (Ni), aluminum (Al), iron (Fe), silver (Ag), gold (Au), platinum (Pt), zinc ( Zn), titanium (Ti) or an alloy thereof. Accordingly, the coating layer having enhanced mechanical property and electrical conductivity of the metal and having heat and corrosion resistance may be formed.

In exemplary embodiments, the conductive material may include a particle-shaped or a dot-shaped conductive material. The particle-shaped conductive material may include, e.g., any one of carbon black, acetylene black, Ketjenblack, channel black, furnace black, lamp black, thermal black and Denka black.

In exemplary embodiments, an amount of the conductive material based on a weight of boron may be from 0.1 weight percent (wt%) to 30 wt%. If the amount of the conductive material is less than 0.1 wt%, the coating layer having low conductivity may be formed, thereby reducing power of the battery. If the amount of the conductive material exceeds 30 wt%, the conductive material may not be stably fixed in the coating layer, and undesirable side reactions may be caused during the repeated charging/discharging or storage of the battery.

In some embodiments, an average thickness of the coating layer may be, e.g., from about 10 nm to about 100 nm. For example, if the thickness of the coating layer is less than 10 nm, effective blocking of the anode active material from the electrolyte may not be sufficiently formed and the decomposition reaction of the electrolyte may occur. Accordingly, lithium ions may be rapidly consumed, thereby increasing the irreversible capacity of the battery.

For example, if the thickness of the coating layer exceeds 100 nm, an electron conduction between the anode active material particles may be interrupted, and input/output of lithium ions may also be interrupted.

The anode active material for a lithium secondary battery may be prepared by preparing the carbon-based particles, mixing with a coating solution to form a mixture, and then heat-treating the mixture.

In exemplary embodiments, the coating solution may be prepared by dispersing a boron source and the conductive material in a solvent. For example, B₂O₃ or H₃BO₃ may be dissolved in a solvent such as water and ethanol together with a conductive material to prepare the coating solution.

A dispersing method commonly known in the related art may be used. For example, an ultrasonic dispersing device, a bead mill, a high-speed blade rotary dispersing mill, etc. may be used. Accordingly, the conductive material including nanometer-sized particles may be uniformly dispersed in the coating solution without causing an agglomeration.

In exemplary embodiments, a mixing weight ratio of the boron source and the conductive material may be from 20:1 to 2:1. More preferably, the mixing weight ratio of the boron and the conductive material may be from 20:1 to 10:3.

If a weight ratio of the conductive material relative to the boron source is less than 1/20, the conductive network formed in the coating layer by the conductive material may be insufficiently formed. If the weight ratio of the conductive material relative to the boron source exceeds 1/2, the conductive material may not be completely dispersed in the coating solution, and the conductive material may not be stably fixed when the coating layer is formed.

The heat-treatment may be performed by heating a dried mixture in an air atmosphere or an inert gas atmosphere. For example, the heat-treatment may be performed at a temperature ranging from 400 °C to 600 °C for 10 minutes to 3 hours. Thus, the coating layer may be stably fixed through an adhesion by melting and a chemical boning with functional groups on the surface of the anode active material, so that long-term life-span property of the battery may be improved.

In some embodiments, a drying may be further performed before the heat-treatment.

The drying may be performed at a temperature from a room temperature to 150°C. In an embodiment, various drying equipment such as a ring dryer, a conveying-type continuous drying using a conveyor belt, a multi-stage batch drying, and a multi-stage rotary type continuous drying may be used.

In an embodiment, the drying may be performed using various heat sources such as a natural air, a hot air from an electric heater, an infrared heater or microwave. Thus, the coating layer may be formed on the surface of the negative electrode active material by a simple process

### <Lithium Secondary Battery>

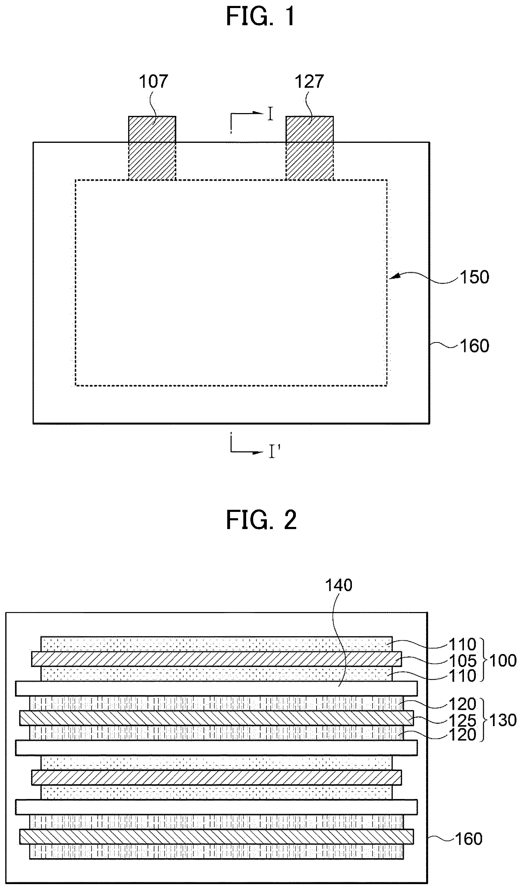

FIGS. 1 and 2 are a schematic top planar view and a cross-sectional view, respectively, illustrating a lithium secondary battery in accordance with exemplary embodiments.

Referring to FIGS. 1 and 2, the lithium secondary battery may include an electrode assembly including a cathode 100, an anode 130 and a separation layer 140 interposed between the cathode and the anode. The electrode assembly may be accommodated and impregnated with an electrolyte in a case 160 .

The cathode 100 may include a cathode active material layer 110 formed by coating a slurry containing a cathode active material on the cathode current collector 105.

The cathode current collector 105 may include aluminum or an aluminum alloy; stainless-steel, nickel, titanium or an alloy thereof; aluminum or stainless-steel surface-treated with carbon, nickel, titanium, silver or the like, etc.

The cathode active material may include a compound capable of reversibly intercalating and de-intercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Chemical Formula 1 below.

[Chemical Formula 1] Li₁₊ₐNi_{1-(x+y)}CoₓM_{y}O₂

In Chemical Formula 1, -0.05≤α≤0.15, 0.01≤x≤0.3, 0.01≤y≤0.3, and M includes at least one element selected from Mn, Mg, Sr, Ba, B, Al, Si, Ti, Zr and W.

A slurry may be prepared by mixing and stirring the cathode active material with a binder, a conductive material and/or a dispersive agent in a solvent. The slurry may be coated on the cathode current collector 105, dried and pressed to from the cathode 100.

The solvent may include a non-aqueous solvent. The non-aqueous solvent may include, e.g., N-methyl-2-pyrrolidone (NMP), dimethylformamide, dimethylacetamide, N,N-dimethylaminopropylamine, ethylene oxide, tetrahydrofuran, etc.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrenebutadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode active material layer 120 formed by coating a slurry containing the anode active material on an anode current collector 125 .

The slurry may be prepared by mixing and stirring a solvent, a binder, a conductive material, a dispersive agent, etc., with the anode active material according to exemplary embodiments as described above. The slurry may be coated on the anode current collector 125, dried and pressed to form the anode 130.

The solvent may include a non-aqueous solvent. The non-aqueous solvent may include, e.g., N-methyl-2-pyrrolidone (NMP), dimethylformamide, dimethylacetamide, N,N-dimethylaminopropylamine, ethylene oxide, tetrahydrofuran, etc.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrenebutadiene rubber (SBR) that may be used with a thickener such as carboxymethyl cellulose (CMC).

An amount of the binder may be property adjusted to an amount required for the formation of the electrode. For example, the amount of the binder may be 5 wt% or less based on a total weight of the anode material and the binder to improve a resistance property of the electrode. In a non-limiting example, the amount of the binder may be about 0.5 wt% or 1 wt%.

The conductive agent may include a conductive carbon-based material.

The anode current collector 125 may include, e.g., a metal having high conductivity and adhesion to the anode slurry and being non-reactive in a voltage range of the battery. For example, the anode current collector 125 may include copper or a copper alloy; stainless-steel, nickel, titanium or an alloy thereof; copper or stainless-steel surface-treated with carbon, nickel, titanium, silver or the like, etc.

In some embodiments, the electrode density of the anode active material layer 120 may be 1.45 g/cm³ or more. In the above range, power, life-span and high temperature storage property may be improved while fabricating the electrode.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separation layer 140, and a plurality of the electrode cells may be stacked to form the electrode assembly that may have e.g., a jelly roll shape. For example, the electrode assembly may be formed by winding, laminating or folding the separation layer 140.

The electrode assembly may be accommodated together with the electrolyte in the case 160 to define the lithium secondary battery. In exemplary embodiments, a non-aqueous electrolyte may be used as the electrolyte.

For example, the non-aqueous electrolyte may include a lithium salt and an organic solvent. The lithium salt may be represented by Li⁺X⁻.

An anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 1, an electrode tab (a cathode tab and an anode tab) may be formed from each of the cathode current collector 105 and the anode current collector 125 to extend to one end of the case 160. The electrode tabs may be welded together with the one end of the case 160 to form an electrode lead (a cathode lead 107 and an anode lead 127) exposed at an outside of the case 160.

The lithium secondary battery may be fabricated into a cylindrical shape using a can, a prismatic shape, a pouch shape, a coin shape, etc.

### Examples and Comparative Examples

### Example 1

### <Anode>

100 g of carbon-based particles composed of a graphite-based material having an average particle diameter of 11 µm were prepared. 0.5 g of B₂O₃ and 0.15 g of carbon nanotube (CNT) were added to ethanol to prepare a coating solution through an ultrasonic dispersion treatment.

After mixing the carbon-based particles and the coating solution, a mixture was prepared by mechanically mixing at 2,200 rpm for 10 minutes in a high-speed stirrer, and then sufficiently dried at a temperature of 120°C to prepare an anode active material having a uniform coating layer on the surface.

Thereafter, the dried material was heat-treated at a temperature of 450°C in an air atmosphere for 30 minutes to prepare an anode active material having a structure of a carbon-based particle-coating layer.

The prepared anode active material and PVDF were mixed in a mass ratio of 95:5 and then dispersed in an NMP solvent to prepare a composition, and the composition was coated on one side of a Cu-foil current collector, dried and pressed to form an anode active material layer having a size of 10cm×10cm×50µm, an electrode density of 1.50±0.05 g/cm³, and a loading amount of 12.8 mg/cm².

### <Cathode>

Li_{1.0}Ni_{0.6}Co_{0.2}Mn_{0.2}O₂ as a cathode active material, Denka Black as a conductive material, PVDF as a binder and N-methyl pyrrolidone as a solvent were mixed in a mass ratio of 46:2.5:1.5:50 to form a cathode slurry. The cathode slurry was coated on an aluminum substrate, dried and pressed to prepare a cathode.

### <Battery Cell>

The cathode and the anode prepared as described above were each notched as a sheet of 4.5cm×5.2cm, and 17 sheets based on the anode were stacked with a separation layer (polyethylene, thickness: 25µm) interposed between the cathode and the anode. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M LiPF₆ solution in a mixed solvent of ethylene carbonate (EC)/ethyl methyl carbonate (EMC)/diethylene carbonate (DEC) (25/45/30; volume ratio), and then 1 wt% of vinylene carbonate, 0.5 wt% of 1,3-propensultone (PRS) and 0.5 wt% of lithium bis(oxalato)borate (LiBOB) were added.

### <Coin Cell>

The anode active material, styrene butadiene rubber (SBR) and carboxymethylcellulose (CMC) as a thickener were mixed in a mass ratio of 97.3:1.5:1.2, and the dispersed in distilled water from which ions were removed to form a composition. The composition was coated on one side of a Cu-foil, dried, pressed and punched to form an anode having a circular disk shape of 1.2 cm², with an electrode density of 1.60±0.05 g/cm³ and a loading amount of 8 mg/cm².

The anode as prepared above, a lithium metal foil as a counter electrode and a separation layer (polyethylene, thickness: 25µm) interposed therebetween were used to form a 2016-type coin cell impregnated in an 1M LiPF₆ electrolyte solution dissolved in a mixed solvent of ethylene carbonate (EC)/ethylmethyl carbonate (EMC)/diethylene carbonate (DEC) (25/45/30; volume ratio).

### Example 2

A secondary battery was prepared by the same method as that of Example 1 except that 1.0 g of B₂O₃ was included in the coating solution.

### Example 3

A secondary battery was prepared by the same method as that of Example 1 except that 1.5 g of B₂O₃ was included in the coating solution.

### Comparative Example 1

A secondary battery was prepared by the same method as that of Example 1 except that carbon nano tube (CNT) was not added in the coating solution.

### Comparative Example 2

A secondary battery was prepared by the same method as that of Example 2 except that a coating solution containing 1.0 g of triphenyl phosphate instead of B₂O₃ was used to form a coating layer on the surface of the carbon-based particles.

### Comparative Example 3

A secondary battery was prepared by the same method as that of Example 1 except that the coating solution was not used.

### Experimental Example

### <Raman spectroscopy analysis>

Raman spectroscopy analysis was performed on the anode active materials according to Examples and Comparative Examples. A laser wavelength of a Raman spectrometer was about 532.06 nm, a laser power was 11.87 mW, a scan was performed once, and a laser exposure time was 20s. An R value indicates a ratio between an intensity (Id) of a D band and an intensity (Ig) of a G band in a Raman spectrum from the particles.

The intensity (Ig) of the G-band is a peak intensity in a wavenumber region from 1,540 cm⁻¹ to 1,620 cm⁻¹, and the intensity (Id) of the D-band is a peak intensity in a wavenumber region from 1,300 cm⁻¹ to 1,420 cm⁻¹.

### <Measurement of boron and conductive material contents in active material particles>

An ICP analysis was performed to measure a content of boron in the anode active materials according to the Examples and Comparative Examples.

Specifically, 0.01 g of the sample was placed in a PP tube, nitric acid and hydrogen peroxide were added, and a cap was closed to dissolve the sample at room temperature. Thereafter, the cap was opened, and the sample was heated/cooled in a heating block and diluted with ultrapure water to prepare a reagent for analysis. Insoluble components were removed from the reagent for analysis with a 0.45um syringe filter, and the reagent was analyzed with Optima's Optima 8300 model. Measurement conditions were RF Power 1500W, 10L/min of coolant gas, 0.2L/min of auxiliary gas, and 0.65 L/min of carrier gas. The content of the conductive material was converted based on an input amount of the sample.

The measurement results are shown in Table 1 below.

**[Table 1]**

| | I_{D}/I_{G} | Boron Content (ppm) | Content of Conductive Material (%) |
|---|---|---|---|
| Example 1 | 0.1 | 119 | 0.149 |
| Example 2 | 0.13 | 440 | 0.149 |
| Example 3 | 0.15 | 490 | 0.148 |
| Comparative Example 1 | 0.09 | 117 | 0 |
| Comparative Example 2 | 0.3 | 0 | 0 |
| Comparative Example 3 | 0.033 | 0 | 0 |

Referring to Table 1, the Raman values of Examples were 30 times or more that of Comparative Example without the coating layer, and the coatings layer including boron and the conductive material were formed in Examples.

### <Measurement of initial charge/discharge capacity>

Charging (CC/CV 0.1C 0.005V 0.01C CUT-OFF) and discharging (CC 0.1C 1.5V CUT-OFF) were performed once for the coin cells according to Examples and Comparative Examples to measure initial charging and discharging capacities (CC: constant current, CV: constant voltage)

### <Measurement of Initial Efficiency >

An initial efficiency was measured as a percentage value by dividing the measured initial discharge capacity with the initial charge capacity.

### <Evaluation of Rate Property>

Charging (CC/CV 0.1C 0.005V 0.01C CUT-OFF) and discharging (CC 0.1C 1.5V CUT-OFF) were performed 10 times for the coin cells according to Examples and Comparative Examples, and then charging (CC/CV 0.1C 0.005V 0.01C CUT-OFF) and discharging (CC 3.0C 1.5V CUT-OFF) were performed once again. The rate property was evaluated as a percentage value (%) by dividing the 3.0C discharge capacity with the 0.1C discharge capacity.

### <Evaluation on Life-span Property (Capacity Retention)>

Charging (CC/CV 0.5C 4.3V 0.05C CUT-OFF) and discharging (CC 1.0C 3.0V CUT-OFF) were repeated 200 times for the battery cells according to Examples and Comparative Examples. The life-span property was measured as a percentage value (%) by dividing a discharge capacity at the 200th cycle by a discharge capacity at the first cycle.

### <Measurement of Formation Gas Generation>

An initial gas emission amount was evaluated by measuring volumes of the batteries according to Examples and Comparative Examples before and after a Pre-charge using a specific gravity measurement method.

For the gas measurement cell, only the Pre-charge (charge condition: CC 0.25C 48min. CUT-OFF) was carried out, and the specific gravity of the cell was measured within 3 hours, and then the gas emission amount compared to an initial state was calculated.

### Measurement Preparation

A sample (1 Ah cell) was prepared.

A water bath that could sufficiently immerse the sample was prepared on a scale having a resolution of 0.001 g or more and was filled with water so that the cells were fully immersed.

DI-water from which ions were removed was used. The scale was set to a zero point. A temperature of a measurement room was constantly maintained at 23°C. to prevent changes in specific gravity and evaporation rate of water, etc.

### Measurement of weight of cells

A weight of the cell before formation was measured at an outside of the water bath before being input into the water bath, and this weight is referred to as a weight out of water.

Thereafter, a wight of the cell before formation in water was measured. The cell was input into the water bath filled with water on the zero-set scale, and the weight was recorded. This weight is referred to as a weight in water. After the measurement, a surface of the cell was wiped, and left at room temperature to be dried completely.

### Calculation of volume of cell

To evaluate a specific gravity of water, a temperature of DI-water in the water bath was measured.

The volume of the cell was calculated by the following formula. Cell volume (ml) = ((weight out of water, g)-(weight in water, g)) / specific gravity of water (0.99754 g/cc at 23□)

### Calculation of volume of formation gas

A volume of the formation gas volume was calculated by subtracting the volume of the cell before formation from the volume of the cell after formation measured by the above method.

The results are shown in in Table 2 below.

**[Table 2]**

| | Example 1 | Example 2 | Example 3 | Comparative Example 1 | Comparative Example 2 | Comparative Example 3 |
|---|---|---|---|---|---|---|
| Initial Charge Capacity of Coin Cell (mAh/g) | 393.3 | 387.1 | 386.5 | 388.1 | 394.8 | 399.7 |
| Initial Discharge Capacity of Coin Cell (mAh/g) | 360.6 | 358.2 | 356.3 | 357.4 | 358.3 | 355.6 |
| Initial Irreversible Capacity of Coin Cell (mAh/g) | 32.7 | 28.9 | 30.2 | 30.7 | 36.5 | 42.1 |
| Initial Efficiency of Coin Cell | 91.7% | 92.5% | 92.2% | 92.1% | 90.8% | 89.0% |
| Rate Property of Coin Cell | 97.4% | 98.5% | 95.1% | 92.3% | 88.4% | 78.2% |
| Life-span Property of Battery Cell | 96.3% | 96.7% | 95.9% | 93.8% | 93.2% | 92.3% |
| Amount of Formation Gas (mL) | 1.3 | 1.1 | 1.2 | 1.2 | 2.8 | 3.0 |

Referring to Table 2, Examples in which boron oxide and carbon nanotube were included in the coating layer provide improved charge/discharge efficiencies and capacity retention rates compared to those of Comparative Examples.

In Comparative Example 1 in which the conductive material was not included in the coating layer, the rate property was remarkably degraded due to the inorganic coating layer having a low conductivity. Further, mechanical strength of the coating layer was low to easily cause detachment of the coating layer and degraded life-span property.

In Comparative Example 2 having the coating layer formed of triphenyl phosphate instead of boron oxide, electrolyte wettability was degraded, and thus the initial efficiency and life-span property were deteriorated compared to those of Examples.

In Comparative Example 3 in which carbon-based particles without a coating layer were used as the anode active material, charge/discharge efficiency and life-span property were lower than those of Examples.

Further, the coating layer provided the anode active material with an oxidation resistance during, e.g., a firing process, thereby reducing the emission of formation gas.

## Claims

1. An anode active material for a lithium secondary battery, comprising:
a carbon-based particle; and
a coating layer bonded to at least a portion of a surface of the carbon-based particle, the coating layer including boron and a conductive material,
wherein the conductive material includes at least one selected from the group consisting of carbon nanotube, carbon nanofiber, a metal fiber, a vapor-grown carbon fiber and graphene.

2. The anode active material for a lithium secondary battery of claim 1, wherein the coating layer includes boron oxide.

3. The anode active material for a lithium secondary battery of claim 1, wherein the aspect ratio of the conductive material is 2 or more, preferably 5 or more.

4. The anode active material for a lithium secondary battery of claim 1, wherein the metal fiber includes at least one selected from the group consisting of copper (Cu), nickel (Ni), aluminum (Al), iron (Fe), silver (Ag), gold (Au), platinum (Pt), zinc (Zn), titanium (Ti) and an alloy thereof.

5. The anode active material for a lithium secondary battery of claim 1, wherein the carbon-based particle includes at least one selected from the group consisting of artificial graphite, natural graphite, graphitized carbon fiber, graphitized mesocarbon microbead, petroleum cokes, a sintered resin-based material, carbon fiber, activated carbon and pyrolytic carbon.

6. The anode active material for a lithium secondary battery of claim 1, wherein a weight ratio of the conductive material relative to boron is from 0.1% to 30%.

7. The anode active material for a lithium secondary battery of claim 1, wherein a thickness of the coating layer is from 10 nm to 100 nm.

8. A method of preparing an anode active material for a lithium secondary battery, comprising:
preparing a carbon-based particle;
preparing a coating solution by dispersing a boron source and a conductive material in a solvent;
mixing the carbon-based particle and the coating solution to form a mixture; and
heat-treating the mixture in an air atmosphere or an inert gas atmosphere at a temperature from 400 °C to 600 °C.

9. The method of claim8, wherein a mixing weight ratio of the boron source and the conductive material is from 20:1 to 2:1.

10. The method of claim8, wherein the solvent includes at least one of water and ethanol.

11. A lithium secondary battery, comprising:
an anode comprising the anode active material for a lithium secondary battery of claim 1; and
a cathode facing the anode.

## Patentansprüche

1. Anodenaktivmaterial für eine Lithium-Sekundärbatterie, das umfasst:
ein Partikel auf Kohlenstoffbasis; und
eine Beschichtungsschicht, die an mindestens einen Teil einer Oberfläche des Partikels auf Kohlenstoffbasis gebunden ist, wobei die Beschichtungsschicht Bor und ein leitfähiges Material enthält,
wobei das leitfähige Material mindestens eines, das ausgewählt ist aus der Gruppe bestehend aus Kohlenstoff-Nanoröhre, Kohlenstoff-Nanofaser, Metallfaser, aufgedampfte Kohlenstofffaser und Graphen, enthält.

2. Anodenaktivmaterial für eine Lithium-Sekundärbatterie nach Anspruch 1, wobei die Beschichtungsschicht Boroxid enthält.

3. Anodenaktivmaterial für eine Lithium-Sekundärbatterie nach Anspruch 1, wobei das Seitenverhältnis des leitfähigen Materials 2 oder mehr, vorzugsweise 5 oder mehr beträgt.

4. Anodenaktivmaterial für eine Lithium-Sekundärbatterie nach Anspruch 1, wobei die Metallfaser mindestens eines, das ausgewählt ist aus der Gruppe bestehend aus Kupfer (Cu), Nickel (Ni), Aluminium (Al), Eisen (Fe), Silber (Ag), Gold (Au), Platin (Pt), Zink (Zn), Titan (Ti) und einer Legierung davon, enthält.

5. Anodenaktivmaterial für eine Lithium-Sekundärbatterie nach Anspruch 1, wobei das Partikel auf Kohlenstoffbasis mindestens eines enthält, das ausgewählt ist aus der Gruppe bestehend aus künstlichem Graphit, natürlichem Graphit, graphitierte Kohlenstofffaser, graphitierte Mesokohlenstoff-Mikrokugel, Petrolkoks, einem gesinterten Material auf Harzbasis, Kohlenstofffaser, Aktivkohle und pyrolytischem Kohlenstoff.

6. Anodenaktivmaterial für eine Lithium-Sekundärbatterie nach Anspruch 1, wobei das Gewichtsverhältnis zwischen dem leitfähigen Material und Bor 0,1 % bis 30 % beträgt.

7. Anodenaktivmaterial für eine Lithium-Sekundärbatterie nach Anspruch 1, wobei die Dicke der Beschichtungsschicht von 10 nm bis 100 nm beträgt.

8. Verfahren zur Herstellung eines Anodenaktivmaterials für eine Lithium-Sekundärbatterie, umfassend:
Herstellung eines Partikels auf Kohlenstoffbasis;
Herstellung einer Beschichtungslösung durch Dispergieren einer Borquelle und eines leitfähigen Materials in einem Lösungsmittel;
Mischen des Partikels auf Kohlenstoffbasis und der Beschichtungslösung, um eine Mischung zu bilden; und
Wärmebehandlung der Mischung in einer Luft- oder Inertgasatmosphäre bei einer Temperatur von 400 °C bis 600 °C.

9. Verfahren nach Anspruch 8, wobei das Mischungsgewichtsverhältnis zwischen der Borquelle und dem leitfähigen Material 20:1 bis 2:1 beträgt.

10. Verfahren nach Anspruch 8, wobei das Lösungsmittel mindestens eines aus Wasser und Ethanol enthält.

11. Lithium-Sekundärbatterie, umfassend:
eine Anode, die das Anodenaktivmaterial für eine Lithium-Sekundärbatterie nach Anspruch 1 enthält; und
eine der Anode gegenüberliegende Kathode.

## Revendications

1. Matériau actif d'anode pour une batterie secondaire au lithium, comprenant :
une particule à base de carbone ; et
une couche de revêtement liée à au moins une partie de la surface de la particule à base de carbone, la couche de revêtement comprenant du bore et un matériau conducteur,
dans lequel le matériau conducteur comprend au moins un matériau choisi dans le groupe constitué par les nanotubes de carbone, les nanofibres de carbone, les fibres métalliques, les fibres de carbone produites par évaporation et le graphène.

2. Matériau actif de l'anode pour une batterie secondaire au lithium de la revendication 1, dans lequel la couche de revêtement comprend de l'oxyde de bore.

3. Matériau actif d'anode pour batterie secondaire au lithium de la revendication 1, dans lequel le rapport d'aspect du matériau conducteur est égal ou supérieur à 2, de préférence égal ou supérieur à 5.

4. Matériau actif d'anode pour une batterie secondaire au lithium de la revendication 1, dans lequel la fibre métallique comprend au moins un élément choisi dans le groupe constitué du cuivre (Cu), du nickel (Ni), de l'aluminium (Al), du fer (Fe), de l'argent (Ag), de l'or (Au), du platine (Pt), du zinc (Zn), du titane (Ti) et de leurs alliages.

5. Matériau actif d'anode pour une batterie secondaire au lithium de la revendication 1, dans lequel la particule à base de carbone comprend au moins une particule choisie dans le groupe constitué par le graphite artificiel, le graphite naturel, la fibre de carbone graphitée, la microbille de mésocarbone graphitée, le coke de pétrole, un matériau fritté à base de résine, la fibre de carbone, le carbone activé et le carbone pyrolytique.

6. Matériau actif d'anode pour une batterie secondaire au lithium de la revendication 1, dans lequel le rapport pondéral entre le matériau conducteur et le bore est compris entre 0,1 % et 30 %.

7. Matériau actif d'anode pour une batterie secondaire au lithium de la revendication 1, dans lequel l'épaisseur de la couche de revêtement est comprise entre 10 nm et 100 nm.

8. Procédure de préparation d'un matériau actif d'anode pour une batterie secondaire au lithium, comprenant :
la préparation d'une particule à base de carbone ;
préparer une solution de revêtement en dispersant une source de bore et un matériau conducteur dans un solvant ;
mélanger la particule à base de carbone et la solution de revêtement pour former un mélange ; et
traitement thermique du mélange dans une atmosphère d'air ou de gaz inerte à une température comprise entre 400 °C et 600 °C.

9. Méthode de la revendication 8, dans laquelle le rapport pondéral entre la source de bore et le matériau conducteur est compris entre 20:1 et 2:1.

10. Méthode de la revendication 8, dans laquelle le solvant comprend au moins l'un des éléments suivants : l'eau et l'éthanol.

11. Batterie secondaire au lithium, comprenant :
une anode comprenant le matériau actif d'anode pour une batterie secondaire au lithium de la revendication 1 ; et
une cathode face à l'anode.
